# EUROPEAN PATENT SPECIFICATION

(11) **EP 2 343 549 B1**
(45) Date of publication and mention of the grant of the patent: **19.08.2020**
(21) Application number: 09817885.8
(22) Date of filing: 02.10.2009
(51) Int. Cl.: G01N 30/16, G01N 30/20, G01N 30/18, G01N 30/86

(54) **ANALYZING DEVICE AND METHOD FOR CONTROLLING SAME**
ANALYSEVORRICHTUNG UND VERFAHREN ZU IHRER STEUERUNG
DISPOSITIF D'ANALYSE ET SON PROCÉDÉ DE VÉRIFICATION

(30) Priority: 03.10.2008 JP 2008258703
(43) Date of publication of application: 13.07.2011
(73) Proprietor: ARKRAY, Inc., Minami-ku Kyoto-shi Kyoto 601-8045 (JP)
(72) Inventor: SAKAI Toshikatsu, Kyoto-shi Kyoto 601-8045 (JP); SEZAKI Akira, Kyoto-shi Kyoto 601-8045 (JP); TAKAGI Takeshi, Kyoto-shi Kyoto 601-8045 (JP)
(74) Representative: MacDougall, Alan John Shaw
(86) International application number: PCT/JP2009/067217
(87) International publication number: WO 2010/038853

(56) References cited:
- EP-A1- 0 892 267
- WO-A2-93/07168
- WO-A2-2004/113873
- WO-A2-2005/048126
- WO-A2-2009/111228
- DE-A1- 4 139 683
- JP-A- 5 034 328
- JP-A- H1 096 715
- JP-A- 63 307 356
- JP-U- 58 030 870
- US-A1- 2002 174 713
- US-A1- 2008 206 883

## Description

### TECHNICAL FIELD

The present invention relates to an analyzing device used as an analysis means in the field of biochemistry, medicine and the like. The invention also relates to a control method for checking the accuracy of such a device. The invention is particularly related to liquid chromatography.

### BACKGROUND ART

In recent years, liquid chromatography devices are often used for sample analysis in the field of organic chemistry, biochemistry, medicine or the like. An example of a liquid chromatography device is disclosed in e.g. Patent Document 1. Fig. 5 shows the structure of a typical liquid chromatography device. The illustrated liquid chromatography device X includes a column 91, a detector 92, a liquid feed pump 93, an injection valve 94, a sample suction nozzle 95 and a suction unit 96. The liquid feed pump 93 is attached to a mobile phase container B containing a mobile phase such as an eluant and can feed the eluant to the column 91 via the injection valve 94. The sample suction nozzle 95 is attached to a sample container C containing a sample. The suction unit 96 is used to draw the sample into the injection valve 94.

The liquid chromatography device X is controlled by a controller, not shown. The controller controls the device so that the eluant is fed by the liquid feed pump 93 into the column 91 after the sample drawn into the injection valve 94 is adsorbed to the filler in the column 91 and then measurement is performed by the detector 92. The sample adsorbed to the filler is desorbed by the eluant and separated into components within the column 91. The detector 92 detects each separated component by e.g. measuring the absorbance.

With respect to such a liquid chromatography device X, the measurement accuracy of the device needs to be regularly checked for stable working of the device. For instance, to check the accuracy, two sample containers C one of which contains a sample of a known higher concentration and the other one of which contains a sample of a known lower concentration are prepared, and concentration measurement is performed with respect to each sample container under the above-described control by the controller, to check if correct measurement result corresponding with the known concentration is obtained with respect to each container. In a clinical site, for example, such accuracy check needs to be performed in the morning, during which a lot of other works need to be done. Thus, it is desirable that the accuracy check can be completed quickly. However, with the conventional liquid chromatography device X, the measurement for accuracy check takes much time, because the nozzle or the like needs to be cleaned every time the sample is changed.

Moreover, to check the accuracy of the device more precisely, the measurement of a sample of a known concentration for such accuracy check is usually performed a plurality of times, e.g. three times, with respect to each concentration. To perform measurement a plurality of times with the liquid chromatography device X, a large number of sample containers need to be prepared, which requires much time for sample preparation and much cost.

Patent Document 1: JP-A-H10-96715

DE 41 39 683 A1 discloses a liquid chromatography system comprising a device for taking a sample and supplying it, as well as at least one eluent, to at least one separation column; a device for supplying eluent; a device for detecting components separated on the column, and a control system for (a) calculating the component ratios and other parameters of the detected components, (b) detecting the operational conditions of the working elements of the system and (c) forwarding signals to these working elements. The column is packed with an organic porous material carrying functional (especially carboxyalkyl) groups and in the dry state has pore diameter 6-120mm; ion exchange capacity 0.1-0.5 meq/g; particle size 3-4 microns and pore volume 0.2-0.6 ml/g. The system is used to analyse biological and living compounds, in blood etc. especially glycosylated forms of haemoglobulin (Hb) to monitor the long term glucose status of diabetics. It allows analysis of all 5 or 6 Hb components and provides rapid separation of the stable glycosylated material (SA1c) from others.

US 2002/174713 A1 discloses rapid characterization and screening of polymer samples to determine average molecular weight, molecular weight distribution and other properties. Rapid flow characterization systems and methods, including liquid chromatography and flow-injection analysis systems and methods are preferably employed. High throughput, automated sampling systems and methods, high-temperature characterization systems and methods, and rapid, indirect calibration compositions and methods are also disclosed. The described methods, systems, and devices have primary applications in combinatorial polymer research and in industrial process control.

WO 2004/113873 A2 discloses methods and systems for analyzing samples, such as gas samples. One method comprises providing a gas sample, increasing pressure applied to the gas sample to compress the sample to a smaller volume and provide a pneumatically focused gas sample, and analyzing the pneumatically focused gas sample using any of a variety of analytical techniques. Also disclosed are systems for gas analysis, including systems for analysis of pneumatically focused, and thereby concentrated, gas samples and for analysis of particulate matter in gas samples. Analytical systems constructed within personal computer cases also are disclosed.

WO 2009/111228 A2 discloses an analytical apparatus including a sample-injection valve, a sample pump, at least two sources of standards, and a selection valve. The sample injection valve has an output port in fluid communication with an LC column, and an input port in fluid communication with a mobile-phase supply line. The at least two sources of standards are associated with at least two pharmaceutical compounds. The selection valve fluidically and selectably connects the sample pump to the at least two sources of standards, to the sample-injection valve, and to at least two pharmaceutical-manufacturing process lines associated with the at least two pharmaceutical compounds. Also disclosed is a method for controlling a pharmaceutical manufacturing process including switching the selection valve to alternately and repeatedly sample the at least two sources of standards and material flowing through the at least two pharmaceutical-manufacturing process lines.

JP-A-H10-96715 mentioned above discloses a filter for removing insoluble matter or others in a sample or eluate is installed across the passage between a sample injection valve and a sample suction nozzle. In this configuration, connection ends of the valve are respectively connected during sample injection, and sample taken out of a sample container using a suction device is filtered against the filter and accumulated on a loop. Because connection ends are then connected, moving phase flows through a column and a sample already injected into the column is separated. In order to inject the sample into the column, connection ends are respectively connected and the sample accumulated on the loop is used. At this time, because connection ends are connected washing liquid flows from the suction device toward the filter to clean it.

US 2008/206883 A1 discloses high-performance liquid chromatography (HPLC) methods to separate and detect morphinone, morphine, and dihydromorphine in the presence of hydromorphone. The isocratic HPLC methods employ ion-pair solute-solute ion-exchange mobile phase techniques in reversed phase chromatography.

WO 93/07168 A2 discloses an apparatus for the separation and analysis of proteins, which includes sample input means, a first liquid chromatography column, a multiport injection valve connecting the sample input means to the column, pump means for providing variable pressure delivery of a solution to the column via the multiport valve, and program means for specifying a sequence of system control programs.

### DISCLOSURE OF THE INVENTION

### Problems to be Solved by the Invention

The present invention has been proposed under the circumstances described above. It is therefore an object of the present invention to provide an analyzing device which allows quick accuracy check and reduction in cost for accuracy check, and to provide a controlling method for the device. The invention particularly relates to a problem with a liquid chromatography device, among various analyzing devices.

### Means for Solving the Problem

According to a first aspect of the present invention, there is provided an analyzing device for liquid chromatography according to claim 1 comprising: a feeder that is connectable to a container in which a sample is contained, the feeder being configured to suck the sample from the container and to feed the sample when the container is connected to the feeder; a measurer for receiving the sample from the feeder; and a controller for performing control for feeding the sample from the feeder to the measurer. The measurer includes a column containing a filler, a detector, and an injection valve capable of introducing a predetermined amount of the sample into the column for measurement and also capable of feeding a mobile phase into the column, the measurer being configured so that the sample adsorbed to the filler is desorbed by the mobile phase and an effluent thereby produced is subjected to measurement by the detector for obtaining measurement results.

In accordance with the first aspect of the invention, the feeder includes a tubular portion capable of retaining therein an amount of the sample necessary for two or more times of measurement and the tubular portion is configured to feed the sample to the injection valve; the controller is configured to perform an accuracy check by: controlling the feeder, when a sample of known concentration is contained in the container, to suck the sample of known concentration from the container into the tubular portion, and to feed a part of the sample from the tubular portion to the measurer; controlling the measurer to obtain measurement results of the sample and checking whether the measurement results correspond with the known concentration; after said measurement of the sample of known concentration, controlling the feeder to feed at least a part of the remaining sample from the tubular portion to the measurer for further measurement of the sample of known concentration, without sucking further sample from the container into the feeder; and controlling the measurer to obtain further measurement results of the sample and checking whether the further measurement results correspond with the known concentration.

According to a second aspect of the present invention, there is provided a method according to claim 2 of controlling an analyzing device for liquid chromatography comprising a feeder that is connectable to a container in which a sample of known concentration is contained, the feeder being configured to suck the sample from the container and to feed the sample when the container is connected to the feeder, and a measurer for receiving the sample from the feeder, the measurer including a column containing a filler, a detector, and an injection valve capable of introducing a predetermined amount of the sample into the column for measurement and also capable of feeding a mobile phase into the column, the measurer being configured so that the sample adsorbed to the filler is desorbed by the mobile phase and an effluent thereby produced is subjected to measurement by the detector for obtaining measurement results.

In accordance with the second aspect of the present invention, the feeder includes a tubular portion capable of retaining therein an amount of the sample necessary for two or more times of measurement and the tubular portion is configured to feed the sample to the injection valve. The method further comprises: performing an accuracy check by: controlling the feeder, when a sample of known concentration is contained in the container, to suck the sample of known concentration from the container into the tubular portion, and to feed a part of the sample from the tubular portion to the measurer; controlling the measurer to obtain measurement results of the sample and checking whether the measurement results correspond with the known concentration; after said measurement of the sample of known concentration, controlling the feeder to feed at least a part of the remaining sample from the tubular portion to the measurer for further measurement of the sample of known concentration, without sucking further sample from the container into the feeder; and controlling the measurer to obtain further measurement results of the sample and checking whether the further measurement results correspond with the known concentration.

The feeder includes a tubular portion capable of retaining in it the sample of an amount necessary for two or more times of measurement. The method comprises first performing control so that part of the sample retained by the feeder is fed to the column via the injection valve, and then, after a single time of measurement, performing control so that at least part of the remaining sample retained by the feeder is fed to the column via the injection valve.

Other features and advantages of the present invention will become more apparent from the detailed description given below with reference to the accompanying drawings.

### BRIEF DESCRIPTION OF THE DRAWINGS

Fig. 1 is a structural view showing an example of liquid chromatography device according to the present invention;
Fig. 2 is a structural view showing the liquid chromatography device of Fig. 1 in a state in which sample is sucked into the device;
Fig. 3 is a structural view showing the liquid chromatography device of Fig. 1 in a state in which sample is being fed to a column of the device;
Fig. 4 is a structural view showing the liquid chromatography device of Fig. 1 during the second time of measurement; and

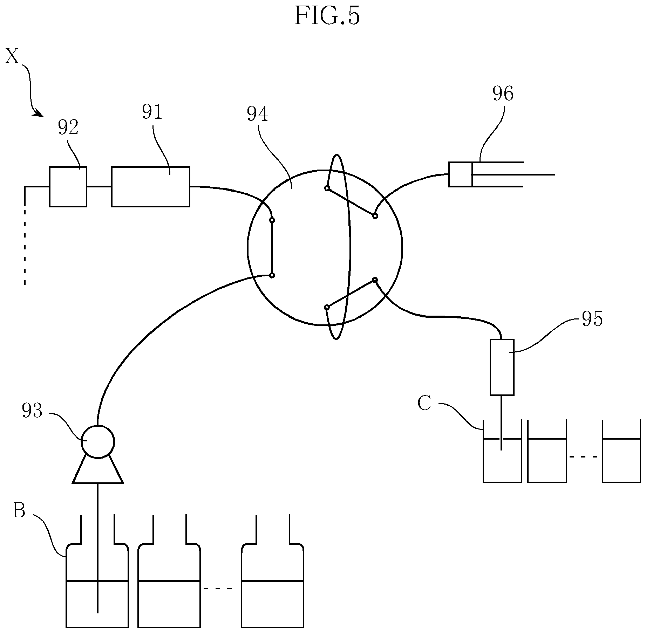

Fig. 5 is a structural view showing an example of conventional liquid chromatography device.

### BEST MODE FOR CARRYING OUT THE INVENTION

Preferred embodiments of the present invention are described below with reference to the accompanying drawings.

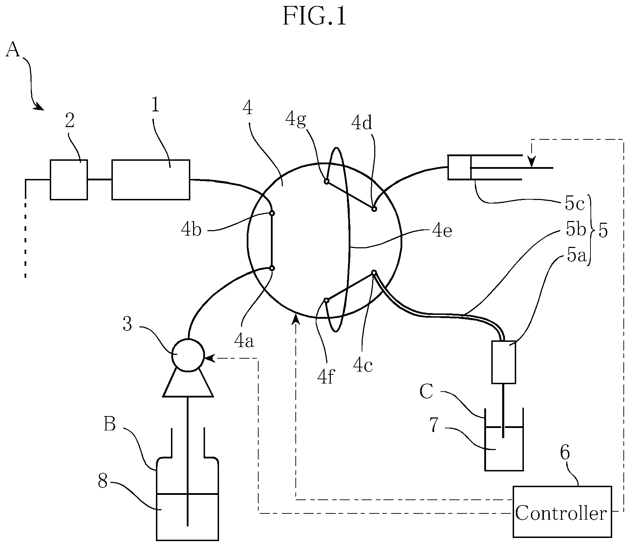

Fig. 1 is a structural view showing an example of liquid chromatography device according to the present invention. The liquid chromatography device A shown in Fig. 1 includes a column 1, a detector 2, a liquid feed pump 3, an injection valve 4, a feeder 5 and a controller 6. The liquid chromatography device A separates a sample into components for analysis by using an eluant 8, which is a mobile phase.

The column 1 contains filler for adsorbing a sample 7 introduced into the column. After the sample 7 is adsorbed to the filler, the eluant 8 is introduced into the column 1, whereby the adsorbed sample 7 is desorbed by the eluant 8. The desorbed sample 7 and the eluant 8 flow through the column 1 as an effluent and are then discharged.

The detector 2 performs e.g. measurement of absorbance with respect to the effluent flowing in the column 1 to analyze the components of the sample 7.

The liquid feed pump 3 is attachable to a mobile phase container B and feeds the eluant 8 from the mobile phase container B to the column 1 under control by the controller 6. The liquid feed pump 3 is also used to feed the sample 7 within the injection valve 4 to the column 1.

The injection valve 74 comprises e.g. a six-way valve and includes ports 4a, 4b, 4c, 4d, 4f, 4g and an injection loop 4e. The valve further includes individual fluid paths between the ports 4a and 4b, between the ports 4c and 4f, and between the ports 4d and 4g. Portions of the injection valve 4 except the injection loop 4e are rotatable under control by the controller 6 so that connection target of the ports 4a, 4b, 4c, 4d, 4f, 4g can be changed. In order for the liquid feed pump 3 to feed the eluant 8 to the column 1, the port 4a is connected to the liquid feed pump 3, whereas the port 4b is connected to the column 1. In this state, the eluant 8 flows into the column 1 through the fluid path between the ports 4a and 4b. The injection loop 4e is configured to connect the ports 4f and 4d or the ports 4a and 4d. The injection loop 4e is capable of storing a sample 7 of a predetermined amount necessary for a single time of measurement. For instance, the amount of the sample 7 necessary for a single time of measurement is 5 µm.

The feeder 5 is provided to feed the sample 7 from the sample container C to the injection valve 4 under control by the controller 6 and includes a sample suction nozzle 5a, a tubular portion 5b and a suction unit 5c. For instance, 400 µL of sample 7 is stored in the sample container C. The sample suction nozzle 5a is attached to the sample container C to draw the sample 7 into the tubular portion 5b. In the state shown in Fig. 1, the port 4c is connected to the tubular portion 5b, whereas the port 4d is connected to the suction unit 5c. The tubular portion 5b is capable of storing the sample 7 of an amount necessary for at least three times of measurement, and has a volume of e.g. about 400 µL. The suction unit 5c draws the sample 7 through the sample suction nozzle 5a into the tubular portion 5b under control by the controller 6. The suction unit 5c further draws the sample 7 stored in the tubular portion 5b into the injection loop 4e connected to the ports 4f and 4g of the injection valve 4.

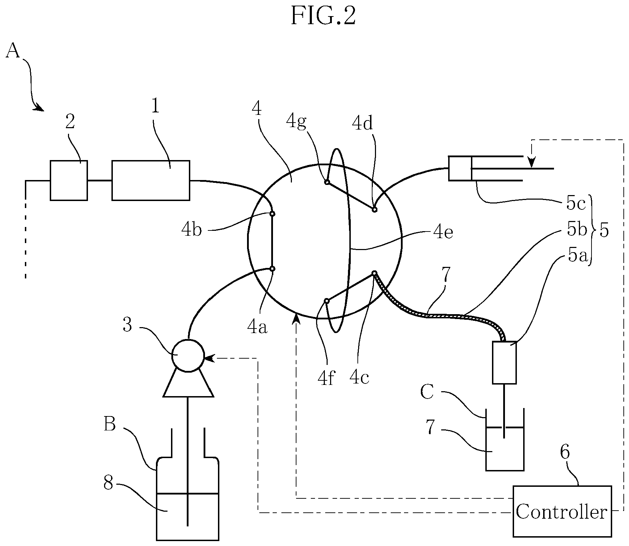

Apart from the control during normal measurement, the controller 6 is capable of performing special control for checking the accuracy of the liquid chromatography device A. The accuracy check is performed by measuring the concentration of a sample 7 of a known concentration three times and checking whether the measurement results correspond with the known concentration. The control method for this accuracy check is described below with reference to Figs. 2-4.

First, as shown in Fig. 2, the controller 6 causes the suction unit 5c to draw the sample 7 of an amount necessary for three times of measurement from the sample container C into the tubular portion 5b through the sample suction nozzle 5a. Then, the controller 6 causes the suction unit 5c to draw part of the sample 7 from the tubular portion 5b into the injection loop 4e. By this, the sample of an amount necessary for two times of measurement is left in the tubular portion 5b.

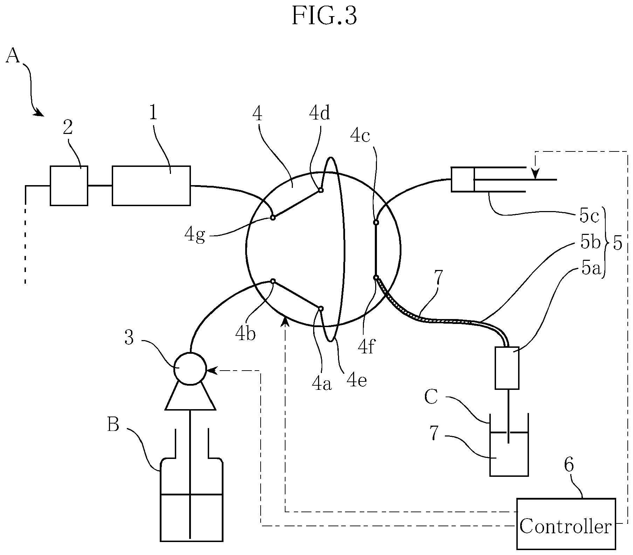

Then, as shown in Fig. 3, the controller 6 causes the injection valve 4 to rotate through 60 degrees so that the port 4g is connected to the column 1, the port 4b is connected to the feed pump 3, the port 4c is connected to the suction unit 5c, the port 4f is connected to the tubular portion 5b, and the ports 4a and 4d are connected to the injection loop 4e. This connection establishes a flow path for the eluant 8 to flow into the column 1 through the feed pump 3 and the injection loop 4e. Then, the controller 6 causes the feed pump 3 to dispense the eluant 8 drawn from the mobile phase container B, thereby causing the sample 7 in the injection loop 4e to be sent into the column 1. Then, after the sample 7 is adsorbed to the filler in the column 1, the controller 6 causes the injection valve 4 to rotate through 60 degrees so that the port 4b is connected to the column 1, the port 4a is connected to the liquid feed pump 3, the port 4d is connected to the suction unit 5c, the port 4c is connected to the tubular portion 5b, the ports 4f and 4g are connected to the injection loop 4e. Then, the controller 6 causes the feed pump 3 to send the eluant 8 from the mobile phase container B into the column 1. The eluant 8 sent into the column 1 desorbs the sample 7 from the filler, whereby effluent is obtained. The effluent is subjected to measurement by the detector 2, whereby the result of the first time of measurement is obtained.

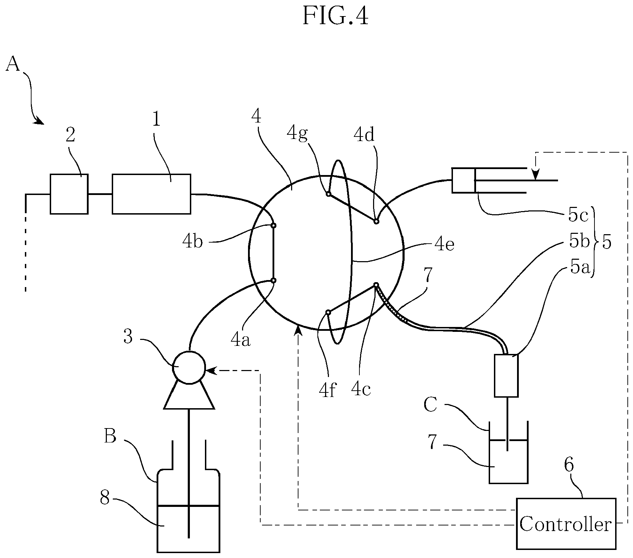

Then, as shown in Fig. 4, the controller 6 causes the suction unit 5c to draw part of the sample 7 remaining in the tubular portion 5b into the injection loop 4e. By this, the sample of an amount necessary for a single time of measurement is left in the tubular portion 5b. At this time, since the sample 7 is not a newly drawn sample, cleaning of the injection loop 4e is not necessary. Thereafter, measurement is performed under the same control as that for the first time of measurement, whereby the result of the second time of measurement is obtained.

Thereafter, similarly to the above, the third time of measurement is performed using the sample 7 remaining in the tubular portion 5b.

The advantages of the liquid chromatography device A are described below.

According to the present embodiment, measurement for accuracy check can be performed three times using a single sample container C. Thus, it is not necessary to prepare a lot of sample containers C for accuracy check. Thus, the liquid chromatography device A considerably saves the effort for the accuracy check and also reduces the cost for the accuracy check.

According to the present embodiment, cleaning work, which usually takes a lot of effort and time, does not need to be performed even a single time before the three times of measurement is completed. Thus, the effort and time taken for the accuracy check is considerably saved. Thus, the liquid chromatography device A allows quick accuracy check.

According to the present embodiment, once the sample 7 is sucked, three times of measurement can be performed, without the need for sucking the sample again. Thus, the accuracy check can be performed efficiently, and the time taken for the accuracy check is considerably reduced. This also contributes to the quick accuracy check of the liquid chromatography device A with reduced cost.

According to the present embodiment, the tubular portion 5b is commonly used as the feeding path for the sample 7 and as the sample storage portion during the accuracy check. Thus, the liquid chromatography device A does not require any special structural member used exclusively for the accuracy check.

The analyzing device according to the present invention is not limited to the foregoing embodiment. The specific structure of each part of the analyzing device according to the present invention may be varied in design in many ways. For instance, although the tubular portion 5b is configured to store the sample 7 of the amount necessary for three times of measurement in the foregoing embodiment, the tubular portion may be configured to store the sample necessary for the measurement of any number of times greater than two.

## Claims

1. An analyzing device (A) for liquid chromatography comprising:
a feeder (5) that is connectable to a container (C) in which a sample (7) is contained, the feeder (5) being configured to suck the sample (7) from the container (C) and to feed the sample (7) when the container (C) is connected to the feeder (5);
a measurer for receiving the sample (7) from the feeder (5); and
a controller (6) for performing control for feeding the sample (7) from the feeder (5) to the measurer; wherein
the measurer includes a column (1) containing a filler, a detector (2), and an injection valve (4) capable of introducing a predetermined amount of the sample (7) into the column (1) for measurement and also capable of feeding a mobile phase (8) into the column (1), the measurer being configured so that the sample (7) adsorbed to the filler is desorbed by the mobile phase (8) and an effluent thereby produced is subjected to measurement by the detector (2) for obtaining measurement results;
the feeder includes a tubular portion (5b) capable of retaining therein an amount of the sample (7) necessary for two or more times of measurement and the tubular portion (5b) is configured to feed the sample (7) to the injection valve (4);
**characterized in that**
the controller (6) is configured to perform an accuracy check by:
controlling the feeder (5), when a sample (7) of known concentration is contained in the container (C), to suck the sample (7) of known concentration from the container (C) into the tubular portion (5b), and to feed a part of the sample (7) from the tubular portion (5b) to the measurer;
controlling the measurer to obtain measurement results of the sample (7) and checking whether the measurement results correspond with the known concentration;
after said measurement of the sample (7) of known concentration, controlling the feeder (5) to feed at least a part of the remaining sample (7) from the tubular portion (5b) to the measurer for further measurement of the sample (7) of known concentration, without sucking further sample (7) from the container (C) into the feeder (5); and
controlling the measurer to obtain further measurement results of the sample (7) and checking whether the further measurement results correspond with the known concentration.

2. A method of controlling an analyzing device (A) for liquid chromatography comprising a feeder (5) that is connectable to a container (C) in which a sample (7) is contained, the feeder (5) being configured to suck the sample (7) from the container (C) and to feed the sample (7) when the container (C) is connected to the feeder (5), and a measurer for receiving the sample (7) from the feeder (5), the measurer including a column (1) containing a filler, a detector (2), and an injection valve (4) capable of introducing a predetermined amount of the sample (7) into the column (1) for measurement and also capable of feeding a mobile phase (8) into the column (1), the measurer being configured so that the sample (7) adsorbed to the filler is desorbed by the mobile phase (8) and an effluent thereby produced is subjected to measurement by the detector (2) for obtaining measurement results;
wherein, the feeder includes a tubular portion capable of retaining therein an amount of the sample (7) necessary for two or more times of measurement and the tubular portion (5b) is configured to feed the sample (7) to the injection valve (4); and
**characterized in that**
the method comprises performing an accuracy check by:
controlling the feeder (5), when a sample (7) of known concentration is contained in the container (C), to suck the sample (7) of known concentration from the container (C) into the tubular portion (5b), and to feed a part of the sample (7) from the tubular portion (5b) to the measurer;
controlling the measurer to obtain measurement results of the sample (7) and checking whether the measurement results correspond with the known concentration;
after said measurement of the sample (7) of known concentration, controlling the feeder (5) to feed at least a part of the remaining sample (7) from the tubular portion (5b) to the measurer for further measurement of the sample (7) of known concentration, without sucking further sample (7) from the container (C) into the feeder (5); and
controlling the measurer to obtain further measurement results of the sample (7) and checking whether the further measurement results correspond with the known concentration.

## Patentansprüche

1. Analysevorrichtung (A) für Flüssigchromatografie, umfassend:
eine Zuführung (5), die mit einem Behälter (C) verbindbar ist, in dem eine Probe (7) enthalten ist, wobei die Zuführung (5) zum Saugen der Probe (7) aus dem Behälter (C) und zum Zuführen der Probe (7), wenn der Behälter (C) mit der Zuführung (5) verbunden ist, angeordnet ist;
eine Messeinrichtung zum Aufnehmen der Probe (7) von der Zuführung (5); und
eine Steuereinheit (6) zum Durchführen von Steuerung zum Zuführen der Probe (7) von der Zuführung (5) zur Messeinrichtung; wobei
die Messeinrichtung eine Säule (1), die einen Füllstoff enthält, einen Detektor (2) und ein Einspritzventil (4), das eine vorbestimmte Menge der Probe (7) zur Messung in die Säule (1) einführen kann und auch eine mobile Phase (8) in die Säule (1) zuführen kann, aufweist, wobei die Messeinrichtung so angeordnet ist, dass die am Füllstoff adsorbierte Probe (7) durch die mobile Phase (8) desorbiert und ein dadurch erzeugtes Eluat Messung durch den Detektor (2) zum Ermitteln von Messergebnissen unterzogen wird;
die Zuführung einen rohrförmigen Teil (5b) aufweist, der darin eine Menge der Probe (7) zurückbehalten kann, die zum zwei- oder mehrmaligen Messen notwendig ist, und der rohrförmige Teil (5b) zum Zuführen der Probe (7) zum Einspritzventil (4) angeordnet ist;
**dadurch gekennzeichnet, dass** die Steuereinheit (6) zum Durchführen einer Genauigkeitsprüfung durch Folgendes angeordnet ist:
Steuern der Zuführung (5), wenn eine Probe (7) bekannter Konzentration im Behälter (C) enthalten ist, um die Probe (7) bekannter Konzentration aus dem Behälter (C) in den rohrförmigen Teil (5b) zu saugen und um einen Teil der Probe (7) vom rohrförmigen Teil (5b) zur Messeinrichtung zuzuführen;
Steuern der Messeinrichtung zum Ermitteln von Messergebnissen der Probe (7) und Prüfen, ob die Messergebnisse der bekannten Konzentration entsprechen;
nach der genannten Messung der Probe (7) bekannter Konzentration Steuern der Zuführung (5) zum Zuführen von wenigstens einem Teil der übrigen Probe (7) vom rohrförmigen Teil (5b) zur Messeinrichtung zur weiteren Messung der Probe (7) bekannter Konzentration, ohne weitere Probe (7) aus dem Behälter (C) in die Zuführung (5) zu saugen; und
Steuern der Messeinrichtung zum Ermitteln weiterer Messergebnisse der Probe (7) und Prüfen, ob die weiteren Messergebnisse der bekannten Konzentration entsprechen.

2. Verfahren zum Steuern einer Analysevorrichtung (A) für Flüssigchromatografie, umfassend eine Zuführung (5), die mit einem Behälter (C) verbindbar ist, in dem eine Probe (7) enthalten ist, wobei die Zuführung (5) zum Saugen der Probe (7) aus dem Behälter (C) und zum Zuführen der Probe (7), wenn der Behälter (C) mit der Zuführung (5) verbunden ist, angeordnet ist, und eine Messeinrichtung zum Aufnehmen der Probe (7) von der Zuführung (5), wobei die Messeinrichtung eine Säule (1), die einen Füllstoff enthält, einen Detektor (2) und ein Einspritzventil (4), das eine vorbestimmte Menge der Probe (7) zur Messung in die Säule (1) einführen kann und auch eine mobile Phase (8) in die Säule (1) zuführen kann, aufweist, wobei die Messeinrichtung so angeordnet ist, dass die am Füllstoff adsorbierte Probe (7) durch die mobile Phase (8) desorbiert und ein dadurch erzeugtes Eluat Messung durch den Detektor (2) zum Ermitteln von Messergebnissen unterzogen wird;
wobei die Zuführung einen rohrförmigen Teil aufweist, der darin eine Menge der Probe (7) zurückbehalten kann, die zum zwei- oder mehrmaligen Messen notwendig ist, und der rohrförmige Teil (5b) zum Zuführen der Probe (7) zum Einspritzventil (4) angeordnet ist; und
**dadurch gekennzeichnet, dass** das Verfahren das Durchführen einer Genauigkeitsprüfung durch Folgendes umfasst:
Steuern der Zuführung (5), wenn eine Probe (7) bekannter Konzentration im Behälter (C) enthalten ist, um die Probe (7) bekannter Konzentration aus dem Behälter (C) in den rohrförmigen Teil (5b) zu saugen und um einen Teil der Probe (7) vom rohrförmigen Teil (5b) zur Messeinrichtung zuzuführen;
Steuern der Messeinrichtung zum Ermitteln von Messergebnissen der Probe (7) und Prüfen, ob die Messergebnisse der bekannten Konzentration entsprechen;
nach der genannten Messung der Probe (7) bekannter Konzentration Steuern der Zuführung (5) zum Zuführen von wenigstens einem Teil der übrigen Probe (7) vom rohrförmigen Teil (5b) zur Messeinrichtung zur weiteren Messung der Probe (7) bekannter Konzentration, ohne weitere Probe (7) aus dem Behälter (C) in die Zuführung (5) zu saugen; und
Steuern der Messeinrichtung zum Ermitteln weiterer Messergebnisse der Probe (7) und Prüfen, ob die weiteren Messergebnisse der bekannten Konzentration entsprechen.

## Revendications

1. Dispositif d'analyse (A) pour chromatographie liquide comprenant :
un dispositif d'alimentation (5) qui peut être raccordé à un récipient (C) dans lequel est contenu un échantillon (7), le dispositif d'alimentation (5) étant configuré pour aspirer l'échantillon (7) du récipient (C) et pour distribuer l'échantillon (7) lorsque le récipient (C) est raccordé au dispositif d'alimentation (5) ;
un dispositif de mesure destiné à recevoir l'échantillon (7) à partir du dispositif d'alimentation (5) ; et
un contrôleur (6) pour effectuer une commande pour amener l'échantillon (7) à partir du dispositif d'alimentation (5) vers le dispositif de mesure; dans lequel
le dispositif de mesure comprend une colonne (1) contenant une charge, un détecteur (2), et une vanne d'injection (4) capable d'introduire une quantité prédéterminée de l'échantillon (7) dans la colonne (1) pour la mesure, et capable également d'introduire une phase mobile (8) dans la colonne (1), le dispositif de mesure étant configuré de telle sorte que l'échantillon (7) adsorbé sur la charge est désorbé par la phase mobile (8) et un effluent ainsi produit est soumis à une mesure par le détecteur (2) pour obtenir des résultats de mesure;
le dispositif d'alimentation comprend une partie tubulaire (5b) capable de retenir dans celle-ci une quantité de l'échantillon (7) nécessaire pour deux périodes de mesure ou plus, et la partie tubulaire (5b) est configurée pour introduire l'échantillon (7) dans la vanne d'injection (4) ;
**caractérisé en ce que** le contrôleur (6) est configuré pour effectuer un contrôle de précision en :
commandant le dispositif d'alimentation (5), quand un échantillon (7) de concentration connue est contenu dans le récipient (C), pour aspirer l'échantillon (7) de concentration connue à partir du récipient (C) dans la partie tubulaire (5b), et distribuer une partie de l'échantillon (7) à partir de la partie tubulaire (5b) au dispositif de mesure;
commandant le dispositif de mesure pour obtenir des résultats de mesure de l'échantillon (7) et en vérifiant si les résultats de mesure correspondent à la concentration connue;
après ladite mesure de l'échantillon (7) de concentration connue, en commandant le dispositif d'alimentation (5) pour distribuer au moins une partie de l'échantillon restant (7) de la partie tubulaire (5b) au dispositif de mesure pour une mesure supplémentaire de l'échantillon (7) de concentration connue, sans aspirer davantage l'échantillon (7) du récipient (C) dans le dispositif d'alimentation (5) ; et en
commandant le dispositif de mesure pour obtenir des résultats de mesure supplémentaires de l'échantillon (7) et en vérifiant si les résultats de mesure supplémentaires correspondent à la concentration connue.

2. Procédé de commande d'un dispositif d'analyse (A) pour chromatographie liquide comprenant un dispositif d'alimentation (5) qui peut être raccordé à un récipient (C) dans lequel est contenu un échantillon (7), le dispositif d'alimentation (5) étant configuré pour aspirer l'échantillon (7) du récipient (C) et pour distribuer l'échantillon (7) lorsque le récipient (C) est raccordé au dispositif d'alimentation (5), et un dispositif de mesure destiné à recevoir l'échantillon (7) à partir du dispositif d'alimentation (5), le dispositif de mesure comprenant une colonne (1) contenant une charge, un détecteur (2), et une vanne d'injection (4) capable d'introduire une quantité prédéterminée de l'échantillon (7) dans la colonne (1) pour la mesure et capable également d'introduire une phase mobile (8) dans la colonne (1), le dispositif de mesure étant configuré de telle sorte que l'échantillon (7) adsorbé sur la charge est désorbé par la phase mobile (8) et un effluent ainsi produit est soumis à une mesure par le détecteur (2) pour l'obtention de résultats de mesure;
dans lequel, le dispositif d'alimentation comprend une partie tubulaire capable de retenir dans celle-ci une quantité de l'échantillon (7) nécessaire pour deux périodes de mesure ou plus, et la partie tubulaire (5b) est configurée pour introduire l'échantillon (7) dans la vanne d'injection (4) ; et
**caractérisé en ce que** le procédé comprend l'exécution d'un contrôle de précision en :
commandant le dispositif d'alimentation (5), quand un échantillon (7) de concentration connue est contenu dans le récipient (C), pour aspirer l'échantillon (7) de concentration connue à partir du récipient (C) dans la partie tubulaire (5b), et distribuer une partie de l'échantillon (7) à partir de la partie tubulaire (5b) au dispositif de mesure;
commandant le dispositif de mesure pour obtenir des résultats de mesure de l'échantillon (7) et en vérifiant si les résultats de mesure correspondent à la concentration connue;
après ladite mesure de l'échantillon (7) de concentration connue, en commandant le dispositif d'alimentation (5) pour distribuer au moins une partie de l'échantillon restant (7) de la partie tubulaire (5b) au dispositif de mesure pour une mesure supplémentaire de l'échantillon (7) de concentration connue, sans aspirer davantage l'échantillon (7) du récipient (C) dans le dispositif d'alimentation (5) ; et en
commandant le dispositif de mesure pour obtenir des résultats de mesure supplémentaires de l'échantillon (7) et en vérifiant si les résultats de mesure supplémentaires correspondent à la concentration connue.
